(19) Europäisches Patentamt
European Patent Office
Office européen des brevets

(11) Veröffentlichungsnummer: **0 193 815**
**B1**

# (12) EUROPÄISCHE PATENTSCHRIFT

(45) Veröffentlichungstag der Patentschrift: **18.10.89**

(51) Int. Cl.⁴: **C 08 G 18/14**, C 08 G 18/61, C 08 L 83/12

(21) Anmeldenummer: **86102287.9**

(22) Anmeldetag: **21.02.86**

## (54) Verfahren zur Herstellung von Polyurethanweichschäumen.

(30) Priorität: **08.03.85 DE 3508292**

(43) Veröffentlichungstag der Anmeldung: **10.09.86 Patentblatt 86/37**

(45) Bekanntmachung des Hinweises auf die Patenterteilung: **18.10.89 Patentblatt 89/42**

(84) Benannte Vertragsstaaten: **BE DE FR GB IT NL**

(56) Entgegenhaltungen:
**DE-A- 2 063 522**
**FR-A- 2 250 781**
**FR-A- 2 287 481**

**CHEMICAL ABSTRACTS, Band 90, Nr. 12, März 1979, Seite 36, Zusammenfassung Nr. 88359r, Columbus, Ohio, US; & JP-A-78 44 357 (UNION CARBIDE CORP.) 28-11-1978**

(73) Patentinhaber: **Th. Goldschmidt AG, Goldschmidtstrasse 100 Postfach 101461, D-4300 Essen 1 (DE)**

(72) Erfinder: **Kollmeier, Hans-Joachim, Dr., Barkhorstrücken 27, D-4300 Essen (DE)**
Erfinder: **Langenhagen, Rolf-Dieter, Kampstrasse 5, D-4321 Hattingen-Niederwenigern (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren zur Herstellung von Polyurethanweichschäumen aus mindestens difunktionellen Polyisocyanaten, Polyolen mit mindestens zwei Hydroxylgruppen je Molekül, deren Äquivalentgewicht je Hydroxylgruppe etwa 700 bis 1500 beträgt, Katalysatoren, Treibmitteln, Polysiloxan-Polyoxyalkylen-Blockmischpolymerisaten als Schaumstabilisatoren sowie gegebenenfalls weiteren üblichen Zusatzmitteln.

Zur Stabilisierung von Polyurethanschäumen werden seit langem Polyoxyalkylen-Polysiloxan-Blockmischpolymerisate verwendet. Diese Blockmischpolymerisate werden dabei dem zu verschäumenden System hinsichtlich des Aufbaus der Polyoxyalkylen- und Polysiloxanblöcke angepasst. Der Aufbau und die Auswahl geeigneter Polyoxyalkylen-Polysiloxan-Blockmischpolymerisat-Stabilisatoren ist in einer umfangreichen Literatur und in zahlreichen Patentschriften beschrieben, die dem Fachmann die Lehre vermitteln, welche Blockmischpolymerisate zur Herstellung von Polyurethanschäumen bestimmter Eigenschaften bevorzugt einzusetzen sind.

Aus der Vielzahl der Patentschriften wird stellvertretend auf die DE-PS 16 94 366 verwiesen. Diese betrifft ein Verfahren zur Herstellung von Polyurethanschaumstoffen aus Polyethern mit durchschnittlich mindestens zwei Hydroxylgruppen je Molekül und organischen Diisocyanaten in Gegenwart von Polyoxyalkylen-Polysiloxan-Blockmischpolymerisaten, Katalysatoren, Wasser und/oder anderen Treibmitteln und ist dadurch gekennzeichnet, dass man Polyoxyalkylen-Polysiloxan-Blockmischpolymerisate verwendet, deren Polysiloxanblock in an sich bekannter Weise aufgebaut ist, deren Polyoxyalkylenblock jedoch aus 25 bis 70 Gew.-% eines Polyoxyalkylens mit einem durchschnittlichen Molekulargewicht von 1600 bis 4000 und einem Ethylenoxidgehalt von 20 bis 100 Gew.-%, Rest Propylenoxid und gegebenenfalls höhere Alkylenoxide, und 30 bis 75 Gew.-% eines Polyoxyalkylens mit einem durchschnittlichen Molekulargewicht von 400 bis 1200 und einem Ethylenoxidgehalt von 65 bis 100 Gew.-%, Rest Propylenoxid und gegebenenfalls höhere Alkylenoxide, besteht.

Das Wesen der vorgenannten Patentschrift besteht somit darin, dass die in dem Blockmischpolymerisat enthaltenen Polyoxyalkylenblöcke nicht identisch sind, sondern dass das Blockmischpolymerisat zwei verschiedene Typen von Polyoxyalkylenblöcken gebunden enthält, die sich im durchschnittlichen Molekulargewicht und im Ethylenoxid-/Propylenoxidgehalt unterscheiden. Durch diese Abstufung des Hydrophil-/Hydrophobverhaltens innerhalb des Moleküls erlangt das Blockmischpolymerisat spezielle tensidische Eigenschaften, wodurch die technischen Anforderungen bei der Polyurethanschaumstabilisierung besonders gut erfüllt werden. Die Blockmischpolymerisate erfüllen in besonderem Masse die an einen Stabilisator für Polyurethanschäume zu stellenden Aufgaben: Sie nukleieren die Gasblasen, emulgieren sonst nicht mischbare Rohstoffe, stabilisieren den aufsteigenden Schaum vor Rückfall und gegen zu Zellvergröberung führender Koaleszenz. Bei Weichschaumstoffen bewirken sie zusätzlich die Öffnung der Zellen nach Erreichen der maximalen Schaumhöhe.

In der US-PS 3 402 192 sind als Schaumstabilisatoren geeignete Copolymere beschrieben, welche einer der folgenden Strukturformeln entsprechen:

(1) $R_aSi[(OSiMe_2)_n(OSiMeG)_dOSiMe_2G]_{4-a}$,

(2) $GMe_2Si)OSiMe_2)_n(OSiMeG)_bOSiMe_2G$,

(3) $Me_3Si(OSiMe_2)_n(OSiMeG)_cOSiMe_3$,

(4) $R_aSi[OSiMe_2)_n(OSiMeG)_cOSiMe_3]_{4-a}$

In diesen Formeln bedeutet R einen Kohlenwasserstoffrest mit 1 bis 10 Kohlenstoffatomen, der frei von aliphatischen Doppelbindungen ist. Me ist ein Methylrest. G ist ein Rest der Formel $-D(OR'')_mA$, wobei D ein Alkylenrest ist. R'' wird von Ethylenresten oder Propylen- oder Butylenresten gebildet, wobei das Verhältnis der Ethylenreste zu den anderen Alkylenresten durch das Verhältnis der Kohlenstoffatome zu den Sauerstoffatomen in dem Rest OR'' festgelegt ist und 2,3:1 bis 2,8:1 beträgt. m hat einen durchschnittlichen Wert von 25 bis 100.

A ist einer der Reste $-OR'$, $-OOCR'$ oder

$$\overset{O}{\overset{\|}{-OCOR'}}$$

, wobei der Rest R' ein Kohlenwasserstoffrest oder Kohlenwasserstoffoxyrest ohne aliphatische Doppelbindung ist und wobei der Rest A insgesamt weniger als 11 Atome umfasst. a hat einen Durchschnittswert von 0 bis 1, n hat einen Durchschnittswert von 6 bis 420, d hat einen Durchschnittswert von 0 bis 30, b hat einen Durchschnittswert von 1 bis 30 und c hat einen Durchschnittswert von 3 bis 30. Mindestens 13 Gew.-% des Copolymerisats sollen aus Dimethylsiloxyeinheiten bestehen. Die Blockmischpolymerisate der vorgenannten US-PS 3 402 192 sollen gute zellöffnende Eigenschaften bei Polyurethanweichschaumstoffen haben.

Ersetzt man in den vorstehend beschriebenen Polyoxyalkylen- Polysiloxan- Blockmischpolymerisaten die die Oxyalkylenblöcke terminierenden Oxyalkyl- oder Oxyacylgruppen durch Hydroxylgruppen, erhält man Stabilisatoren mit gesteigerter stabilisierender Wirkung. Dabei zeigt sich jedoch, dass mit zunehmendem Ersatz der endständig inerten Gruppen durch Hydroxylgruppen Polyurethanweichschäume erhalten werden, deren Anteil an geschlossenen Zellen immer grösser wird. Bei vollständigem Ersatz der Endgruppen durch Hydroxylgruppen erhält man Polyurethanweichschäume, die weitgehend geschlossenzellig sind. Dieser Effekt ist z.B. in der Zeitschrift «Plaste und Kautschuk» 30 (1983), Seite 367 ff., beschrieben.

Der Erfindung liegt die Aufgabe zugrunde, zur Herstellung von Polyurethanweichschäumen geeignete Stabilisatoren aufzufinden, welche die hervorragenden schaumstabilisierenden Eigenschaften solcher Hydroxylgruppen enthaltender

Polyoxyalkylen-Polysiloxan-Blockmischpolymerisate aufweisen, aber zu Polyurethanweichschäumen führen, die offenzellig sind.

Überraschenderweise wurde nun gefunden, dass diese Eigenschaftskombination dann erzielt wird, wenn man erfindungsgemäss als Polysiloxan-Polyoxyalkylen-Blockmischpolymerisate solche der allgemeinen Formel

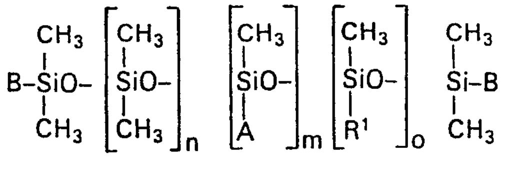

I

worin

A über Kohlenstoff an Silicium gebundene Polyoxyalkylenblöcke $A^1$ und $A^2$ der allgemeinen Formel $-R^2-O-(C_xH_{2x}O-)_yR^3$ bedeutet, wobei $R^2$ ein zweiwertiger Kohlenwasserstoffrest mit 2 bis 4 Kohlenstoffatomen ist und die Bedeutung von $R^3$, x und y sich aus den nachfolgenden Bedingungen ergibt,

B ein Methylrest, der Rest A oder $R^1$ und

$R^1$ ein gegebenenfalls substituierter Alkylrest mit 1 bis 12 Kohlenstoffatomen (vorzugsweise ein Methylrest), ein Aryl- oder Alkarylrest ist,

n einen Wert von 30 bis 200,

m falls B ein Methylrest ist oder dem Rest $R^1$ entspricht, einen Wert von 3 bis 20, und

falls B dem Rest A entspricht, einen Wert von 1 bis 18,

o einen Wert von 0 bis 40 hat,

wobei $n \geqq 5\,m$ und $o \leqq \frac{1}{3}\,n$ ist, mit den Bedingungen, dass

a) die Blöcke $A^1$ aus 30 bis 60 Gew.-% Oxyethylen-, Rest Oxypropyleneinheiten bestehen, der Rest $R^3$ ein Wasserstoffrest ist und das mittlere Molekulargewicht der Blöcke $A^1$ 2500 bis 4500 beträgt,

b) die Blöcke $A^2$ aus 30 bis 80 Gew.-% Oxyethylen-, Rest Oxypropyleneinheiten bestehen, der Rest $R^3$ ein Alkylrest mit 1 bis 4 Kohlenstoffatomen oder ein Acylrest ist und das mittlere Molekulargewicht der Blöcke $A^2$ 800 bis 2400 beträgt,

c) das Molverhältnis der Blöcke $A^1$:$A^2$ 20:80 bis 60:40 beträgt und im durchschnittlichen Molekül mindestens je ein Block $A^1$ und $A^2$ vorhanden sind,

verwendet.

Aus der Formel I geht hervor, dass die Oxyalkylenblöcke in den Blockmischpolymerisaten seitenständig und gegebenenfalls zusätzlich an einem oder an beiden Enden der Polysiloxankette gebunden sind. Dabei ist es ein wesentliches Merkmal der Erfindung, dass ein Gemisch von Polyoxyalkylenresten unterschiedlichen mittleren Molekulargewichtes gebunden ist. Diese beiden unterschiedlichen Polyoxyalkylenblöcke können in bezug auf die Grenzen des Oxypropylen-/Oxyethylenverhältnisses gleich sein oder sich unterscheiden. Von besonderer Bedeutung ist aber die Bedingung, dass die Polyoxyalkylenblöcke $A^1$, welche ein mittleres Molekulargewicht von 2500 bis 4500 aufweisen, endständig eine Hydroxylgruppe tragen, während die anderen Polyoxyalkylenblöcke $A^2$, welche ein mittleres Molekulargewicht von 800 bis 2400 aufweisen, endständig eine Gruppe $OR^3$ aufweisen, wobei $R^3$ ein Alkylrest mit 1 bis 4 Kohlenstoffatomen oder ein Acylrest ist. Als Alkylrest ist insbesondere der Methyl- oder Butylrest bevorzugt. Er kann jedoch auch ein Ethyl- oder Propylrest sein. Der Alkylrest $R^3$ kann jedoch auch verzweigt sein. Als Acylrest ist insbesondere der Rest einer niederen aliphatischen Carbonsäure, besonders der Essigsäure, bevorzugt.

B ist ein Methylrest oder der Rest A bzw. $R^1$. Dabei hat $R^1$ die Bedeutung eines Alkylrestes mit 1 bis 12 Kohlenstoffatomen, eines Arylrestes oder eines Alkarylrestes. Als Alkylreste sind insbesondere die geradkettigen Alkylreste bevorzugt. Ein bevorzugter Arylrest ist der Phenylrest. Als Alkarylrest ist der Phenylethylenrest bevorzugt. Die Reste $R^1$ können gegebenenfalls substituiert sein. Als Substituenten kommen insbesondere Halogenatome oder Pseudohalogenreste, vorzugsweise Chloratome oder Cyanoreste, in Frage.

Die Indices haben folgende Bedeutungen:

n=30 bis 200, vorzugsweise 50 bis 150.

m hat für den Fall, dass B ein Methylrest ist oder dem Rest $R^1$ entspricht, einen Wert von 3 bis 20, vorzugsweise von 3 bis 15. Entspricht jedoch B dem Rest A, ist der Wert von m 1 bis 18, vorzugsweise 1 bis 13.

o hat einen Wert von 0 bis 40, vorzugsweise von 0 bis 20.

Die Werte der Indices sind insoweit miteinander verknüpft, als $n \geqq 5\,m$ und $o \leqq \frac{1}{3}\,n$ sein muss.

Die Werte der Indices x und y ergeben sich aus den Difinitionen der Polyoxyalkylenblöcke $A^1$ und $A^2$. Dabei entspricht der Wert x dem Molverhältnis der Oxyethylen- zu den Oxypropyleneinheiten. Bei einem Molverhältnis von 1:1 ist x = 2,5. Bei einem Molverhältnis von 1:3 beträgt der Wert von x 2,75. Der Wert von y ist durch das Molekulargewicht des Polyoxyalkylenblockes und dessen x-Wert festgelegt. Ist zum Beispiel das Molekulargewicht des Polyoxyalkylenblocks 3000 und liegen gleiche Molanteile an Oxyethylen- und Oxypropyleneinheiten vor, d.h. x = 2,5, ist y = 58,8. In den Polyoxyalkylenblöcken $A^1$ und $A^2$ können die Oxyethylen- und Oxypropyleneinheiten statistisch verteilt oder blockweise angeordnet sein.

Die erfindungsgemäss zu verwendenden Stabilisatoren zeichnen sich durch ausserordentlich hohe Stabilisierungseigenschaften aus, wobei überraschenderweise frotz des Gehalts an OHterminierten Polyoxyalkylenblöcken bei Verwendung in Polyurethanweichschäumen offene Zellen entstehen.

Dieses Verhalten war für den Fachmann überraschend, da er hätte erwarten müssen, dass der Grad der Offenzelligkeit der Schäume wesentlich hätte abnehmen müssen. Dieses überraschende Verhalten konnte insbesondere nicht aus dem vorgenannten Stand der Technik hergeleitet werden.

Die Herstellung der beim erfindungsgemässen Verfahren zu verwendenden Blockmischpolymerisate gelingt auf an sich bekannte Weise, wobei auf die US-PS 3 637 541 und insbesondere auf die DE-PS 31 33 869 verwiesen wird.

Ausgangsprodukte zur Herstellung der erfindungsgemässen Blockmischpolymerisate sind Polysiloxane der allgemeinen Formel I, in denen die Reste A und gegebenenfalls B Wasserstoffatome sind, die mit Polyethern umgesetzt werden, deren Rest $R^2$ durch den Rest $CH_2{=}CH{-}(CH_2)_q{-}$, wobei q = 0, 1 oder 2 (bevorzugt q = 1) ist, ersetzt ist. Die Additionsreaktion erfolgt vorzugsweise in Gegenwart von Platinkatalysatoren, gegebenenfalls in Gegenwart eines inerten Lösungsmittels, bei Temperaturen in einem Bereich von 50 bis 180 °C.

Das erfindungsgemässe Verfahren wird an Hand der folgenden Beispiele näher erläutert.

Beispiel 1

Ausgehend von einem SiH-funktionellen Polysiloxan folgender Zusammensetzung

$$(CH_3)_3SiO{-}\left[(CH_3)_2SiO{-}\right]_{63,3}\left[\begin{matrix}CH_3SiO{-}\\ |\\ H\end{matrix}\right]_{4,7}Si(CH_3)_3$$

werden durch Anlagerung folgender Polyethergemische Blockmischpolymerisate hergestellt und als Schaumstabilisatoren untersucht.

Polyethergemisch I
40 Mol-% $CH_2{=}CH{-}CH_2{-}(OC_2H_4{-})_{41}(OC_3H_6{-})_{31}OCH_3$
60 Mol-% $CH_2{=}CH{-}CH_2{-}(OC_2H_4{-})_{17}(OC_3H_6{-})_{13}OCH_3$
gibt Stabilisator A (Vergleich)

Polyethergemisch II
40 Mol-% $CH_2{=}CH{-}CH_2{-}(OC_2H_4{-})_{41}(OC_3H_6{-})_{31}OH$
60 Mol-% $CH_2{=}CH{-}CH_2{-}(OC_2H_4{-})_{17}(OC_3H_6{-})_{13}OH$
gibt Stabilisator B (Vergleich)

Polyethergemisch III
40 Mol-% $CH_2{=}CH{-}CH_2{-}(CO_2H_4{-})_{41}(OC_3H_6{-})_{31}OH{=}A^1$
60 Mol-% $CH_2{=}CH{-}CH_2{-}(OC_2H_4{-})_{17}(OC_3H_6{-})_{13}OCH_3{=}A^2$
gibt Stabilisator C (erfindungsgemäss zu verwendendes Blockmischpolymerisat)

Die Blockmischpolymerisate A, B und C sind jeweils klare, wasserlösliche Flüssigkeiten mit folgenden Viskositäten

Stabilisator A 2900 mPa.s bei 20 °C
Stabilisator B 8500 mPa.s bei 20 °C
Stabilisator C 4400 mPa.s bei 20 °C

Die drei Produkte werden in der nachfolgenden Polyurethanweichschaumformulierung als Stabilisatoren in unterschiedlichen Einsatzkonzentrationen nach üblichen Verfahrensbedingungen überprüft. Zusätzlich werden die beiden Stabilisatoren D und E gemäss dem Stand der Technik in die Überprüfung einbezogen.

Stabilisator D gemäss DE-PS 16 94 336, Beispiel 1, Substanz C

Stabilisator E gemäss US-PS 3 402 192 (Handelsprodukt DC 190 der Firma Dow Corning)

Schaumformulierung I

| | Gew.-Teile |
|---|---|
| Polyoxypropylentriol (OH-Zahl 56) | 100 |
| Wasser | 4,8 |
| Methylenchlorid | 15 |
| Zinn(II)octoat | 0,4 |
| Triethylendiamin | 0,1 |
| Dimethylethanolamin | 0,15 |
| Stabilisator | 0,8 bzw. 1,2 |
| Toluoldiisocyanat (80/20 2.4/2.6-Isomerengemisch) | 58,9 |

Es werden die in Tabelle 1 dargestellten Ergebnisse erhalten.

Tabelle 1

| Stabilisator | Stabilisatorkonzentration Gew.-Teile | Schaumhöhe in cm | Raumgewicht in kg/m³ | Rückfall in cm | Offenzelligkeit |
|---|---|---|---|---|---|
| A Vergleich | 1,2 | 37 | 15,6 | 1,8 | gut |
| | 0,8 | 34 | 16,3 | 3,0 | gut |
| B Vergleich | 1,2 | 39 | 14,6 | 0,3 | geschlossen |
| | 0,8 | 36 | 15,3 | 0,5 | geschlossen |
| C erfindungs- | 1,2 | 38 | 14,9 | 0,5 | mittel |
| gemäss | 0,8 | 36 | 15,6 | 0,9 | gut |
| D Vergleich | 1,2 | 36 | 15,9 | 2,3 | gut |
| | 0,8 | 34 | 16,6 | 3,8 | sehr gur |
| E Vergleich | 1,2 | 37 | 15,5 | 2,0 | mittel |
| | 0,8 | 35 | 16,1 | 3,2 | gut |

Die Ergebnisse zeigen, dass die erfindungsgemäss zu verwendenden Stabilisatoren hinsichtlich Schaumvolumen und Tendenz zum Rückfall nach dem Aufsteigen verbesserte Stabilisierungseigenschaften ergeben und trotzdem zu offenzelligen Schäumen führen.

Beispiel 2

Ausgehend von einem SiH-funktionellen Polysiloxan folgender Zusammensetzung

$$H-Si(CH_3)_2O-\left[(CH_3)_2SiO-\right]_{65}\left[\underset{H}{\underset{|}{CH_3SiO-}}\right]_3 Si(CH_3-)_2H$$

werden durch Anlagerung folgender Polyethergemische Blockmischpolymerisate hergestellt und als Schaumstabilisatoren überprüft.

Polyethergemisch IV
50 Mol-% $CH_2=CH-CH_2-(OC_2H_4-)_{41}(OC_3H_6-)_{31}OCH_3$
50 Mol-% $CH_2=CH-CH_2-(CO_2H_4-)_{17}(OC_3H_6-)_{10}OCH_3$
gibt Stabilisator F (Vergleich)

Polyethergemisch V
50 Mol-% $CH_2=CH-CH_2-(OC_2H_4-)_{41}(OC_3H_6-)_{31}OH$
50 Mol-% $CH_2=CH-CH_2-(OC_2H_4-)_{17}(OC_3H_6-)_{10}OH$
gibt Stabilisator G (Vergleich)

Polyethergemisch VI
50 Mol-% $CH_2=CH-CH_2-(OC_2H_4-)_{41}(OC_3H_6-)_{31}OH=A^1$
50 Mol-% $CH_2=CH-CH_2-(OC_2H_4-)_{17}(OC_3H_6-)_{10}OCH_3=A^2$
gibt Stabilisator H (erfindungsgemäss)

Die erhaltenen Blockmischpolymerisate F, G und H sind jeweils klare, wasserlösliche Flüssigkeiten, die folgende Viskositäten aufweisen

Stabilisator F 3100 mPa.s bei 20 °C
Stabilisator G 9050 mPa.s bei 20 °C
Stabilisator H 4800 mPa.s bei 20 °C

Die drei Produkte werden in der nachfolgend angegebenen Formulierung für Polyurethanweichschaum nach üblichen Verfahrensbedingungen als Stabilisatoren überprüft. Zum Vergleich werden die beiden Stabilisatoren D und E gemäss dem Stand der Technik verwendet.

Schaumformulierung II

| | Gew.-Teile |
|---|---|
| Polyoxyalkylentriol (OH-Zahl 48, Verhältnis PO/EO = 88/12) | 100 |
| Wasser | 4,5 |
| Trichlorfluormethan | 18 |
| Zinn(II)octoat | 0,2 |
| Triethylendiamin | 0,08 |
| Dimethylethanolamin | 0,15 |
| Stabilisator | 0,6 |
| Toluoldiisocyanat (80/20 2.4/2.6-Isomerengemisch) | 55,8 |

Es werden die in Tabelle 2 dargestellten Ergebnisse erhalten.

Tabelle 2

| Stabilisator | Stabilisatorkonzentration Gew.-Teile | Schaumhöhe in cm | Raumgewicht in kg/m³ | Rückfall in cm | Offenzelligkeit |
|---|---|---|---|---|---|
| F Vergleich | 0,6 | 34 | 17,0 | 2,0 | gut |
| G Vergleich | 0,6 | 36 | 16,0 | 0,3 | geschlossen |
| Herfindungsgemäss | 0,6 | 35 | 16,2 | 0,8 | gut |
| D Vergleich | 0,6 | 33 | 17,4 | 2,8 | sehr gur |
| E Vergleich | 0,6 | 34 | 16,9 | 1,7 | mittel–gut |

Die Ergebnisse machen deutlich, dass die erfindungsgemässen Stabilisatoren eine grössere Höhe und damit mehr Schaumvolumen sowie einen verminderten Rückfall gegenüber den Produkten des Standes der Technik ergeben und trotzdem zu offenzelligen Schäumen führen.

## Patentansprüche

1. Verfahren zur Herstellung von Polyurethanweichschäumen aus mindestens difunktionellen Polyisocyanaten, Polyolen mit mindestens zwei Hydroxylgruppen je Molekül, deren Äquivalentgewicht je Hydroxylgruppe etwa 700 bis 1500

beträgt, Katalysatoren, Treibmitteln, Polysiloxan-Polyoxyalkylen-Blockmischpolymerisaten mit zwei Polyoxyalkylenblöcken unterschiedlichen Molekulargewichts im Molekül als Schaumstabilisatoren sowie gegebenenfalls weiteren üblichen Zusatzmitteln, dadurch gekennzeichnet, dass man als Polysiloxan-Polyoxyalkylen-Blockmischpolymerisate solche der allgemeinen Formel

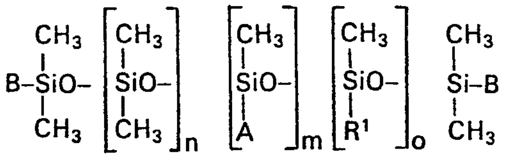 I

worin

A über Kohlenstoff an Silicium gebundene Polyoxyalkylenblöcke $A^1$ und $A^2$ der allgemeinen Formel $-R^2-O-(C_xH_{2x}O-)_yR^3$ bedeutet, wobei $R^2$ ein zweiwertiger Kohlenwasserstoffrest mit 2 bis 4 Kohlenstoffatomen ist und die Bedeutung von $R^3$, x und y sich aus den nachfolgenden Bedingungen ergibt,

B ein Methylrest, der Rest A oder $R^1$ und

$R^1$ ein gegebenenfalls substituierter Alkylrest mit 1 bis 12 Kohlenstoffatomen, ein Aryl- oder Alkarylrest ist,

n einen Wert von 30 bis 200,

m falls B ein Methylrest ist oder dem Rest $R^1$ entspricht, einen Wert von 3 bis 20, und falls B dem Rest A entspricht, einen Wert von 1 bis 18,

o einen Wert von n bis 40 hat,

wobei $n \geqq 5\,m$ und $o \leqq \frac{1}{3}\,n$ ist,

mit den Bedingungen, dass

a) die Blöcke $A^1$ aus 30 bis 60 Gew.-% Oxyethylen-, Rest Oxypropyleneinheiten bestehen, wobei der Rest $R^3$ ein Wasserstoffrest ist und das mittlere Molekulargewicht der Blöcke $A^1$ 2500 bis 4500 beträgt,

b) die Blöcke $A^2$ aus 30 bis 80 Gew.-% Oxyethylen-, Rest Oxypropyleneinheiten bestehen, wobei der Rest $R^3$ ein Alkylrest mit 1 bis 4 Kohlenstoffatomen oder ein Acylrest ist und das mittlere Molekulargewicht der Blöcke $A^2$ 800 bis 2400 beträgt,

c) das Molverhältnis der Blöcke $A^1 : A^2$ 20 : 80 bis 60 : 40 beträgt und im durchschnittlichen Molekül mindestens je ein Block $A^1$ und $A^2$ vorhanden sind,verwendet.

2. Verfahren nach Anspruch 1, dadurch gekennzeichnet, dass man als Polysiloxan-Polyoxyalkylen-Blockmischpolymerisate solche der allgemeinen Formel von Anspruch 1 verwendet, welche mindestens eine der folgenden Bedingungen erfüllen:

$R^1$ = Methylrest,
$R^2 = -CH_2CH_2CH_2$-Rest,
B = Rest A oder Methylrest,
n = 50 bis 150,
m =3 bis 15, falls B ein Methylrest ist, und
1 bis 13, falls B dem Rest A entspricht,
o = 0 bis 20.

## Revendications

1. Procédé pour la préparation de mousses de polyuréthanne souples, à partir de polyisocyanates au moins difonctionnels, de polyols comportant au moins deux groupes hydroxyle par molécule, dont la masse moléculaire par groupe hydroxyle est d'environ 700 à 1500, de catalyseurs, d'agents gonflants, de copolymères séquencés polysiloxane-polyoxyalkylène de masses moléculaires différentes, servant de stabilisants de mousse, et éventuellement d'autres additifs habituels, caractérisé en ce qu'on utilise comme copolymères séquencés polysiloxane-polyoxyalkylène des copolymères de ce genre ayant la formule générale suivante:

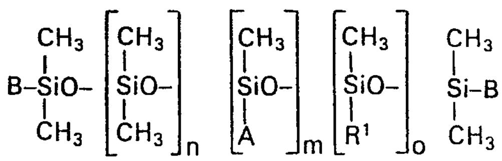 I

dans laquelle

A représente des séquences polyoxyalkylène $A^1$ et $A^2$, liées au silicium par l'intermédiaire d'un atome de carbone, de formule générale $-R^2-O-(C_xH_{2x}O-)_yR^3$, où $R^2$ est un radical hydrocarboné divalent ayant de 2 à 4 atomes de carbone, la signification de $R^3$, x et y ressortant des conditions ci-après,

B est un radical méthyle, le radical A ou $R^1$, et

$R^1$ est un radical alkyle éventuellement substitué ayant de 1 à 12 atomes de carbone, un radical aryle ou alcaryle,

n vaut de 30 à 200,

m, si B est un radical méthyle ou correspond au radical

$R^1$, vaut de 3 à 20, et, si B correspond au radical A, vaut de 1 à 18,

o vaut de 0 à 40,

avec $n \geqq 5\,m$ et $0 \leqq 1/3\,n$,

avec les conditons suivantes:

a) que les séquences $A^1$ soient constituées de 30 à 60% en poids de motifs oxyéthylène, le reste étant constitué de motifs oxypropylène, le radical $R^3$ étant un radical hydrogène, et la masse moléculaire moyenne des séquences $A^1$ étant de 2500 à 4500,

b) que les blocs $A^2$ soient constitués de 30 à 80% en poids de motifs oxyéthylène, le reste étant constitué de motifs oxypropylène. le radical $R^3$ étant un radical alkyle ayant de 1 à 4 atomes de carbone ou un radical acyle, la masse moléculaire moyenne des séquences $A^2$ étant de 800 à 2400,

c) que le rapport en moles entre les séquences $A^1$ et $A^2$ soit de 20:80 à 60:40, et qu'une molécule moyenne contienne au moins chacune des séquences $A^1$ et $A^2$.

2. Procédé selon la revendication 1, caractérisé en ce qu'on utilise en tant que copolymères séquencés polysiloxane-polyoxyalkylène des copolymères de ce genre ayant la formule générale de la revendication 1, qui satisfont à au moins l'une des conditions suivantes:

$R^1$ est un radical méthyle,

$R^2$ est un radical $-CH_2CH_2CH_2$,

B est un radical A ou le radical méthyle,

n vaut de 50 à 150,

m vaut de 3 à 15 si B est un radical méthyle, et de 1 à 13 si B est le radical A,

o vaut de 0 à 20.

## Claims

1. Process for the production of flexible polyurethane foams made from polyisocyanates which are at least difunctional, polyols with at least two hydroxyl groups per molecule, whose equivalent weight per hydroxyl group is about 700 to 1500, catalysts, blowing agents, polysiloxane/polyoxyalkylene block copolymers having two polyoxyalkylene blocks of different molecular weight in the molecule as foam stabilizers and optionally other customary additives, characterized in that as polysiloxane/polyoxyalkylene block copolymers, those of the general formula

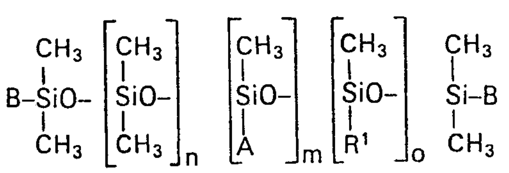 I

in which

A denotes polyoxyalkylene blocks $A^1$ and $A^2$ of the general formula $-R^2-O-(C_xH_{2x}O-)_yR^3$ bound via carbon to silicon, $R^2$ being a divalent hydrocarbon radical with 2 to 4 carbon atoms and the meaning of $R^3$, x and y being defined from the subsequent conditions,

B is a methyl radical, the radical A or $R^1$ and

$R^1$ is an optionally substituted alkyl radical with 1 to 12 carbon atoms, an aryl radical or an alkaryl radical,

n has a value from 30 to 200,

m has a value form 3 to 20 if B is a methyl radical or corresponds to the radical $R^1$, and m has a value from 1 to 18 if B corresponds to the radical A,

o has a value from 0 to 40,

n being $\geqq 5$ m and o $\leqq 1/3$ n,

with the conditions that

a) the $A^1$ blocks comprise 30 to 60% by weight of oxyethylene units, the remainder being oxypropylene units, the radical $R^3$ being a hydrogen radical and the average molecular weight of the $A^1$ blocks being 2500 to 4500,

b) the $A^2$ blocks comprise 30 to 80% by weight of oxyethylene units, the remainder being oxypropylene units, the radical $R^3$ being an alkyl radical with 1 to 4 carbon atoms or an acyl radical and the average molecular weight of the $A^2$ blocks being 800 to 2400,

c) the molar ratio of $A^1$ blocks : $A^2$ blocks is 20:80 to 60:40 and at least one block each of $A^1$ and $A^2$ are present in the average molecule,

are used.

2. Process according to Claim 1, characterized in that as polysiloxane/polyoxyalkylene block copolymers those of the general formula according to Claim 1 which satisfy at least one of the following conditions, are used:

$R^1$ = methyl radical,

$R^2$ = $-CH_2CH_2CH_2$-radical,

B = radical A or a methyl radical,

n = 50 to 150,

m = 3 to 15, if B is a methyl radical, and 1 to 13, if B corresponds to the radical A,

o = 0 to 20.